# EUROPEAN PATENT APPLICATION

(11) **EP 3 450 879 A1**
(43) Date of publication of application: **06.03.2019**
(21) Application number: 17841497.5
(22) Date of filing: 14.08.2017
(51) Int. Cl.: F25B 1/00

(54) **REFRIGERATION CYCLE DEVICE**

(30) Priority: 18.08.2016 JP 2016160519
(71) Applicant: Mitsubishi Heavy Industries Thermal Systems, Ltd., Tokyo 108-8215 (JP)
(72) Inventor: MITOMA, Keisuke, Tokyo 108-8215 (JP); ENYA, Atsushi, Tokyo 108-8215 (JP); ISOZUMI, Shinichi, Tokyo 108-8215 (JP); KURACHI, Masaya, Tokyo 108-8215 (JP); YOSHIDA, Junichi, Tokyo 108-8215 (JP)
(74) Representative: Henkel, Breuer & Partner
(86) International application number: PCT/JP2017/029330
(87) International publication number: WO 2018/034275

(57) **Abstract**

The purpose of the present invention is to provide a refrigeration cycle device having a simple configuration, and to provide a refrigeration cycle device in which excessive cooling and condensation in a power element can be prevented. An air conditioner to which this refrigeration cycle device is applied is provided with a cooling branched pipe (31) that allows some refrigerant between heat exchangers in a refrigerant circuit to bypass to an inlet side of a compressor, a cooler (32) that is in thermal contact with the cooling branched pipe (31) and uses some refrigerant to cool a power element (36) provided to an electric circuit that controls the operation of the compressor, and an expansion valve (33) provided only to a side of the cooling branched pipe (31) that is further downstream than the cooler (32).

## Description

### Technical Field

The present invention relates to a refrigeration cycle device.

### Background Art

In an air conditioner in which a refrigerant circulates to perform a vapor compression-type refrigeration cycle, an electric circuit such as an inverter circuit is mounted in order to control an operation state of the electric motor of a compressor. In general, the inverter circuit uses a power element that generates high heat, and in an air conditioner in the related art, means for cooling the power element is provided such that a temperature of the power element does not become higher than an operable temperature.

For example, PTL 1 describes a refrigeration device including a refrigerant circuit provided with a main circuit which is connected to a compressor, a heat source-side heat exchanger, an expansion mechanism, and a usage-side heat exchanger and performs a refrigeration cycle, a branch circuit which branches some of high pressure liquid refrigerant flowing through the main circuit into a refrigerant in a pressure state lower than a high pressure state of the main circuit, a power supply device which is provided with a power element and supplies electric power to a driving unit of component elements of the refrigerant circuit, and a cooler which is connected to the branch circuit and cools the power element by the refrigerant flowing through the branch circuit.

### Citation List

### Patent Literature

[PTL 1] Japanese Patent No. 5516602

### Summary of Invention

### Technical Problem

However, since PTL 1 includes a throttle mechanism (throttle valve) connected to an upstream side of the cooler of the branch circuit and a throttle valve connected to a downstream side of the cooler of the branch circuit, the configuration becomes complicated due to many valves, and there is a possibility that the cause of failure increases and the risk of failure occurrence increases. Further, since the throttle mechanism (throttle valve) is connected to the upstream side of the cooler, the refrigerant from the upstream side is excessively inflated so that the cooler excessively cools the power element, which may cause dew condensation in the power element.

The present invention has been made in view of such circumstances, and an object is to provide a refrigeration cycle device having a simplified structure.

It is also intended to provide a refrigeration cycle device capable of preventing excessive cooling and condensation of a power element.

### Solution to Problem

In order to solve the above problems, a refrigeration cycle device of the present invention employs the following means.

That is, a refrigeration cycle device according to an aspect of the present invention includes a refrigerant circuit in which a compressor, a heat source-side heat exchanger, an expansion valve, and a usage-side heat exchanger are connected by pipes to circulate a refrigerant; a cooling branched pipe that allows some of the refrigerant between heat exchangers in the refrigerant circuit to bypass to an inlet side of the compressor; a cooler that is in thermal contact with the cooling branched pipe, and uses some of the refrigerant to cool a power element provided in an electric circuit that controls the operation of the compressor; and a variable throttle provided only on a downstream side of the cooling branched pipe from the cooler.

In the above configuration, since only the variable throttle operates to cool the power element, the configuration can be simplified, and the risk of failure occurrence can be reduced by reducing the cause of failure.

Further, since the variable throttle is provided in the cooling branched pipe, even in a case where a differential pressure between the inlet of the cooling branched pipe and the outlet of the cooling branched pipe is low, by adjusting the opening of the variable throttle, it is possible to cool the power element by securing the flow rate of the refrigerant introduced into the cooling branched pipe.

Further, by adjusting the opening of the variable throttle, it is possible to make a necessary minimum amount of refrigerant flow to cool the power element. Therefore, in a case where the heat generation amount of the power element is small, the amount of refrigerant flowing through the cooling branched pipe is reduced, and it is possible to prevent the refrigerant from flowing into the compressor while still containing the liquid phase without being completely evaporated by excessively consuming the refrigerant for cooling the power element.

Further, the variable throttle is provided only on the downstream side (that is, on the low-pressure side) of the cooler. That is, a throttle is not provided in the cooling branched pipe on the upstream side of the cooler. Therefore, by narrowing the opening of the variable throttle, the pressure of the refrigerant flowing through the cooler can be set as the pressure on the high-pressure side. Thus, for example, when one compressor is stopped in a refrigerant circuit in which a plurality of compressors is combined, since the power element provided in the electric circuit that controls the stopped compressor does not generate heat, it does not need to be cooled and the opening of variable throttle may be narrowed. In this case, since the pressure of the refrigerant flowing through the cooler becomes the pressure on the high-pressure side and the evaporation temperature becomes high, dew condensation of the power element can be prevented.

A refrigeration cycle device according to another aspect of the present invention includes a refrigerant circuit in which a compressor, a heat source-side heat exchanger, an expansion valve, and a usage-side heat exchanger are connected by pipes to circulate a refrigerant; a cooling branched pipe that allows some of the refrigerant between heat exchangers in the refrigerant circuit to bypass to an inlet side of the compressor; a cooler that is in thermal contact with the cooling branched pipe, and uses some of the refrigerant to cool a power element provided in an electric circuit that controls the operation of the compressor; an upstream-side fixed throttle provided on an upstream side of the cooling branched pipe from of the cooler, a downstream-side fixed throttle provided on a downstream side of the cooling branched pipe from the cooler, and an on-off valve provided on a downstream side of the downstream-side fixed throttle of the cooling branched pipe.

In the above configuration, since only the capillary and the on-off valve operate to cool the power element, the configuration can be simplified, and the risk of failure occurrence can be reduced by reducing the cause of failure. Further, the configuration can be realized at a lower cost.

Since the fixed throttle is provided on the upstream side of the cooler, the refrigerant between heat exchangers communicating with the cooling branched pipe is not directly introduced to the cooler. Further, since the fixed throttle is provided on the downstream side of the cooler, the refrigerant on the inlet side of the compressor communicating with the cooling branched pipe is not directly introduced to the cooler. Therefore, a desired pressure loss is generated in the refrigerant to be introduced to the cooler from the upstream side of the cooler and the refrigerant to be introduced to the cooler from the downstream side of the cooler, and the pressure of the refrigerant passing through the cooler can be set to the desired pressure.

In the above configuration, an on-off valve is provided on the downstream side of the downstream-side fixed throttle. The refrigerant passing through the cooler becomes the gas phase and the flow rate of the gas-phase refrigerant becomes faster, so the pressure loss of the refrigerant when passing through the on-off valve increases. This makes it possible to lower the pressure of the refrigerant passing through the on-off valve. Therefore, the pressure loss of the fixed throttle provided on the same circuit as the on-off valve can be set low. In other words, it is possible to substitute a part of the fixed throttle by the on-off valve.

Further, the on-off valve is provided on the downstream side (that is, on the low-pressure side) of the cooler. Therefore, by closing the on-off valve, the pressure of the refrigerant flowing through the cooler can be set as the pressure on the high-pressure side. Thus, for example, when one compressor is stopped in a refrigerant circuit in which a plurality of compressors is combined, since the power element provided in the electric circuit that controls the stopped compressor does not generate heat, it does not need to be cooled and the on-off valve may be closed. In this case, since the pressure of the refrigerant flowing through the cooler becomes the pressure on the high-pressure side and the evaporation temperature becomes high, dew condensation of the power element can be prevented.

A refrigeration cycle device according to still another aspect of the present invention includes a refrigerant circuit in which a compressor, a heat source-side heat exchanger, an expansion valve, and a usage-side heat exchanger are connected by pipes to circulate a refrigerant; a cooling branched pipe that allows some of the refrigerant between heat exchangers in the refrigerant circuit to bypass to an inlet side of the compressor; and a cooler that is in thermal contact with the cooling branched pipe, and uses some of the refrigerant to cool a power element provided in an electric circuit that controls the operation of the compressor, the cooling branched pipe includes an upstream-side pipe positioned on an upstream side of the cooler and a downstream-side pipe positioned on a downstream side of the cooler, the upstream-side pipe includes a first upstream pipe provided with a first on-off valve and a first fixed throttle provided on a downstream side of the first on-off valve, and a second upstream pipe provided with a second fixed throttle and formed in parallel with the first upstream pipe, the downstream-side pipe includes a first downstream pipe provided with a second on-off valve and a third fixed throttle provided on an upstream side of the second on-off valve, and a second downstream pipe provided with a third on-off valve and a fourth fixed throttle provided on an upstream side of the third on-off valve and formed in parallel with the first downstream pipe, and the third fixed throttle and the fourth fixed throttle have different pressure losses.

In the above configuration, a first upstream pipe provided with a first on-off valve and a first fixed throttle and a second upstream pipe provided only with a second fixed throttle are provided on the upstream side of the cooler. Thus, in a case where the first on-off valve is in the closed state, the refrigerant circulates only in the second upstream pipe, and in a case where the first on-off valve is in the open state, the refrigerant circulates in the first upstream pipe and the second upstream pipe. Therefore, even in a case where a differential pressure between the inlet of the branched pipe for refrigerant and the outlet of the branched pipe for refrigerant is low, by opening the first on-off valve, it is possible to cool the power element by securing the flow rate of the refrigerant introduced into the branched pipe for refrigerant.

Since the first fixed throttle and the second fixed throttle are provided in the upstream-side pipe, the refrigerant between heat exchangers with which the cooling branched pipe communicates is not directly introduced to the cooler. Further, since the third fixed throttle and the fourth fixed throttle are provided in the downstream-side pipe, the refrigerant on the inlet side of the compressor communicating with the cooling branched pipe is not directly introduced to the cooler. Therefore, a desired pressure loss is generated in the refrigerant to be introduced to the cooler from the upstream side of the cooler and the refrigerant to be introduced to the cooler from the downstream side of the cooler, and the pressure of the refrigerant passing through the cooler can be set to the desired pressure.

Further, a first downstream pipe provided with a second on-off valve and a third fixed throttle and a second downstream pipe provided with a third on-off valve and a fourth fixed throttle are provided on the downstream side of the cooler, and the third fixed throttle and the fourth fixed throttle have different pressure losses. In a case where the second on-off valve and the third on-off valve are in the open state, the refrigerant circulates both in the first downstream pipe and the second downstream pipe. In a case where the second on-off valve is in the open state and the third on-off valve is in the closed state, the refrigerant circulates only in the first downstream pipe. In a case where the second on-off valve is in the closed state and the third on-off valve is in the open state, the refrigerant circulates only in the second downstream pipe. In this way, three levels of pressure loss can be generated on the downstream side of the cooler, so that the pressure of the refrigerant flowing through the cooler can be set to a desired pressure. Therefore, the evaporation temperature of the refrigerant flowing through the cooler can be adjusted to a desired temperature.

Further, on-off valves are provided on the downstream sides of the first fixed throttle, the third fixed throttle, and the fourth fixed throttle, respectively. The refrigerant passing through the cooler becomes the gas phase and the flow rate of the gas-phase refrigerant becomes faster, so the pressure loss of the refrigerant when passing through the on-off valve increases. This makes it possible to lower the pressure of the refrigerant passing through the on-off valve. Therefore, the pressure loss of the fixed throttle provided on the same circuit as the on-off valve can be set low. In other words, it is possible to substitute a part of the fixed throttle by the on-off valve.

Further, a second on-off valve and a third on-off valve are provided on the downstream side (that is, the lower pressure side) of the cooler. Therefore, by closing the second on-off valve and the third on-off valve, the pressure of the refrigerant flowing through the cooler can be set as the pressure on the high-pressure side. Thus, for example, when one compressor is stopped in a refrigerant circuit in which a plurality of compressors is combined, since the power element provided in the electric circuit that controls the stopped compressor does not generate heat, it does not need to be cooled and the on-off valve may be closed. In this case, since the pressure of the refrigerant flowing through the cooler becomes the pressure on the high-pressure side and the evaporation temperature becomes high, dew condensation of the power element can be prevented.

A refrigeration cycle device according to still another aspect of the present invention includes a refrigerant circuit in which a compressor, a heat source-side heat exchanger, an expansion valve, and a usage-side heat exchanger are connected by pipes to circulate a refrigerant; a cooler that is in thermal contact with the refrigerant circuit between the heat exchangers, and uses some of the refrigerant to cool a power element provided in an electric circuit that controls the operation of the compressor; a valve portion provided on the heat source-side heat exchanger side or the usage-side heat exchanger side of the cooler of the refrigerant circuit; and a fixed throttle that is provided in parallel with the cooler and the valve portion.

In the above configuration, since only the on-off valve and the variable throttle operate to cool the power element, the configuration can be simplified, and the risk of failure occurrence can be reduced by reducing the cause of failure.

The cooler is in thermal contact with the refrigerant circuit between heat exchangers. Therefore, the pressure of the refrigerant passing through the cooler becomes relatively high and the evaporation temperature becomes high, so that dew condensation of the power element can be prevented.

Further, it is possible to stop circulation of a refrigerant to the cooler by closing the valve portion. Therefore, for example, by closing the valve portion in a case where the temperature of the refrigerant changes rapidly, such as a case of switching between cooling and heating, damage to cooler due to the rapid change in the temperature of the refrigerant circulating in the cooler can be suppressed.

### Advantageous Effects of Invention

According to the aspects of the present invention, the configuration of a refrigeration cycle device is simple, and excessive cooling and condensation in a power element can be prevented.

### Brief Description of Drawings

Fig. 1 is a main part of a refrigerant circuit diagram of a refrigeration cycle device according to first to third embodiments of the present invention.
Fig. 2 is an enlarged view of a cooling device according to embodiments of the present invention.
Fig. 3 is a schematic diagram of a cooling device according to a first embodiment of the present invention.
Fig. 4 is a Mollier diagram of the cooling device of Fig. 3.
Fig. 5 is a schematic diagram of a cooling device according to a second embodiment of the present invention.
Fig. 6 is a Mollier diagram of the cooling device of Fig. 5.
Fig. 7 is a schematic diagram of a cooling device according to a third embodiment of the present invention.
Fig. 8 is a Mollier diagram of the cooling device of Fig. 7.
Fig. 9 is a main part of a refrigerant circuit diagram of a refrigeration cycle device according to a fourth embodiment of the present invention.
Fig. 10 is a schematic diagram of a cooling device according to the fourth embodiment of the present invention.
Fig. 11 is a Mollier diagram of the cooling device of Fig. 9.

### Description of Embodiments

Hereinafter, embodiments related to the present invention will be described with reference to the drawings.

### [First Embodiment]

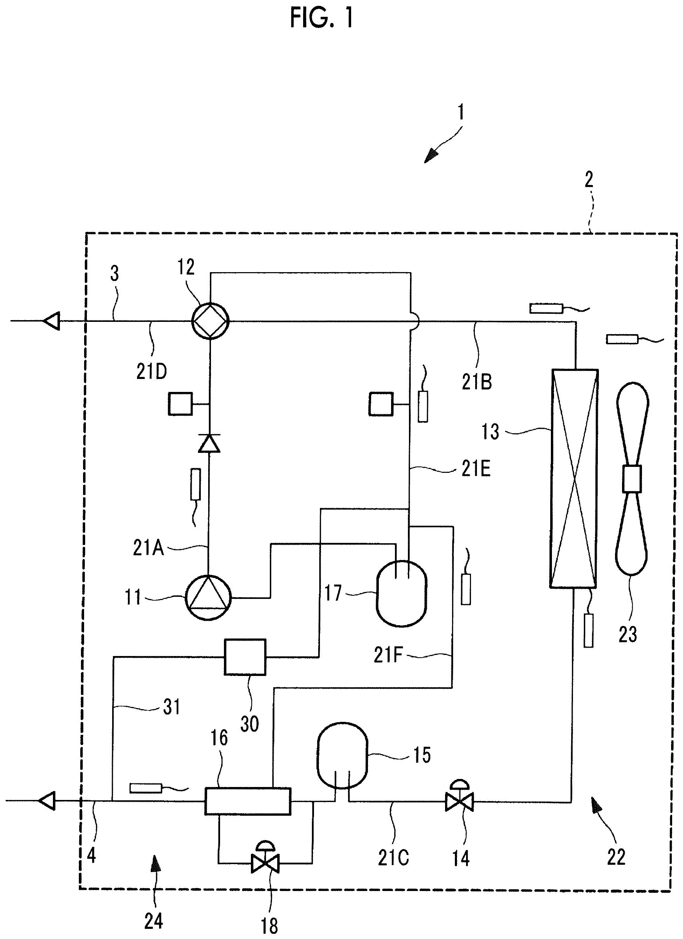

Hereinafter, a first embodiment of the present invention will be described with reference to Fig. 1 to Fig. 4.

Fig. 1 shows an air conditioner 1 as an example of application of a refrigeration cycle device. The refrigeration cycle device is not explicitly shown in Fig. 1, but it can be applied to a heat pump. The air conditioner 1 includes outdoor unit 2, a gas-side pipe 3 and a liquid-side pipe 4 led from the outdoor unit 2, and an indoor unit (not shown) connected between the gas-side pipe 3 and the liquid-side pipe 4.

The outdoor unit 2 includes an inverter driven compressor 11 compressing a refrigerant, a four-way switching valve 12 for switching the circulation direction of the refrigerant, an outdoor heat exchanger (heat source-side heat exchanger) 13 for heat exchange between the refrigerant and the outside air, an outdoor expansion valve (EEVH) 14 for heating, a receiver 15 storing a liquid refrigerant, a supercooling heat exchanger 16 giving supercooling to a liquid refrigerant, a supercooling expansion valve 18 controlling the amount of a refrigerant divided into the supercooling heat exchanger 16, an accumulator 17 separating a liquid component from a refrigerant gas sucked into the compressor 11 and sucking only the gas component into the compressor 11, a gas-side operation valve (not shown), and a liquid-side operation valve (not shown).

The above devices on the outdoor unit 2 side are connected through refrigerant pipes such as discharge pipe 21A, gas pipe 21B, liquid pipe 21C, gas pipe 21D, suction pipe 21E, and supercooling branched pipe 21F for supercooling as in a known manner to constitute an outdoor-side refrigerant circuit 22. Further, the outdoor unit 2 is provided with an outdoor fan 23 that blows outside air to the outdoor heat exchanger 13.

The gas-side pipe 3 and the liquid-side pipe 4 are refrigerant pipes connected to the gas side operation valve and the liquid side operation valve of the outdoor unit 2, and the lengths thereof are set according to the distance between the outdoor unit 2 and the indoor unit connected to the outdoor unit 2 at the time of installation at the site. An indoor unit is connected between the gas-side pipe 3 and the liquid-side pipe 4. Thus, a closed one refrigeration cycle 24 is configured. An indoor heat exchanger (usage-side heat exchanger) (not shown) is disposed in the indoor unit.

In the air conditioner 1, the heating operation is performed as follows. The high temperature and high-pressure refrigerant gas compressed by the compressor 11 is discharged to the discharge pipe 21A and then circulated to the gas pipe 21D side by the four-way switching valve 12. The refrigerant is led from the outdoor unit 2 through a gas-side operation valve and the gas-side pipe 3, and introduced into the indoor unit through a gas-side pipe (not shown) on the indoor side.

The high temperature and high-pressure refrigerant gas introduced into the indoor unit is heat-exchanged with indoor air in an indoor heat exchanger. The indoor air is heated by this heat exchange and is used for heating the room. On the other hand, refrigerant is condensed and returned to the outdoor unit 2 through the liquid-side pipe 4.

The refrigerant returning to the outdoor unit 2 reaches the supercooling heat exchanger 16 through the liquid-side operation valve and the liquid pipe 21C flows into the receiver 15 and is temporarily stored, and the circulation amount is adjusted, after supercooling is applied as in the case of cooling. The liquid refrigerant is supplied to the outdoor expansion valve (EEVH) 14 through the liquid pipe 21C, is adiabatically expanded there, and then flows into the outdoor heat exchanger 13.

In the outdoor heat exchanger 13, the outside air blown from the outdoor fan 23 and the refrigerant are heat-exchanged, and the refrigerant absorbs heat from the outside air and is evaporated and gasified. The refrigerant passes through the outdoor heat exchanger 13, the gas pipe 21B, the four-way switching valve 12, and the suction pipe 21E, is joined with the refrigerant from the supercooling branched pipe 21F, and is introduced to the accumulator 17. In the accumulator 17, the liquid component contained in the refrigerant gas is separated, only the gas component is sucked into the compressor 11 and compressed again in the compressor 11. The heating operation is performed by repeating the above cycle.

On the other hand, the cooling operation is performed as follows. The high temperature and high-pressure refrigerant gas compressed by the compressor 11 is discharged to the discharge pipe 21A. Thereafter, the refrigerant gas is circulated to the gas pipe 21B side by the four-way switching valve 12, heat exchanged with the outside air blown by the outdoor fan 23 by the outdoor heat exchanger 13, and condensed and liquefied. The liquid refrigerant passes through the outdoor expansion valve and is temporarily stored in the receiver 15.

The liquid refrigerant whose circulation amount has been adjusted by the receiver 15 is partially diverted to the supercooling branched pipe 21F while the liquid refrigerant flows through the supercooling heat exchanger 16 through the liquid pipe 21C, exchanges heat with the refrigerant adiabatically expanded by the supercooling expansion valve 18 to give a supercooling degree. The liquid refrigerant is led from the outdoor unit 2 to the liquid-side pipe 4 through the liquid side operation valve, and further the liquid refrigerant led to the liquid-side pipe 4 flows into the indoor unit.

The refrigerant flowing into the indoor unit is adiabatically expanded, becomes a gas-liquid two-phase flow, and flows into the indoor heat exchanger. In the indoor heat exchanger, the refrigerant which has become a gas-liquid two-phase flow exchanges heat with indoor air. The indoor air is cooled by this heat exchange and is used for cooling a room. On the other hand, refrigerant is gasified and flows into gas-side pipe 3.

The refrigerant gas flowing into the gas-side pipe 3 returns to the outdoor unit 2 again, passes through the gas-side operation valve, the gas pipe 21D, and the four-way switching valve 12 to reach the suction pipe 21E. Then, the refrigerant gas is joined with the refrigerant gas from the supercooling branched pipe 21F, and introduced into the accumulator 17. In the accumulator 17, the liquid component contained in the refrigerant gas is separated, and only the gas component is sucked into the compressor 11. The refrigerant sucked into the compressor is compressed again in the compressor 11. The cooling operation is performed by repeating the above cycle. As described above, the air conditioner 1 as a refrigerant cycle device constitutes a refrigerant circuit circulating a refrigerant.

In such a refrigeration cycle device, an electric circuit 41 such as an inverter circuit is provided to control the operation of the compressor 11. A power element 36 is provided in the electric circuit 41, and the electric circuit 41 is cooled by the cooling device 30. The cooling device 30 cooling the electric circuit 41 will be described below.

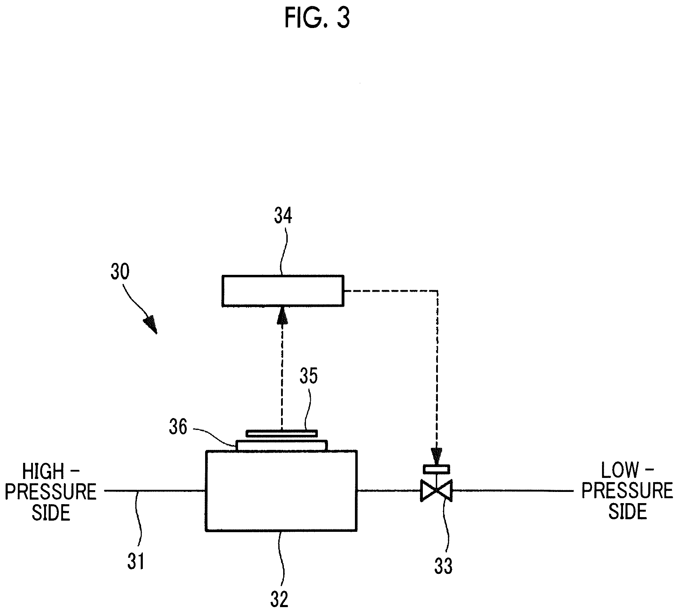

As shown in Fig. 3, the cooling device 30 includes a cooling branched pipe 31, a cooler 32, an expansion valve (variable throttle) 33, a control unit 34, and an element temperature detector 35.

As shown in Fig. 1, the cooling branched pipe 31 connects a liquid pipe 21C provided between heat exchangers in order to connect the outdoor heat exchanger 13 in the outdoor unit 2 described above with the indoor heat exchanger, with a suction pipe 21E connected to the inlet side of the compressor 11, by bypassing them. That is, the cooling branched pipe 31 bypasses a portion of the liquid refrigerant between heat exchangers in the refrigerant circuit to the inlet side of the compressor 11. The cooling branched pipe 31 is provided with a cooler 32, and the cooling branched pipe 31 and the cooler 32 are in thermal contact with each other.

As shown in Fig. 3, one expansion valve 33 is provided only on the downstream side (on the lower pressure side in Fig. 3) of the cooler 32 of the cooling branched pipe 31. Therefore, throttle means such as an expansion valve is not provided in the cooling branched pipe 31 on the upstream side of the cooler 32. The opening of the expansion valve 33 is adjustable from 0% (a closed state) and 100% (a fully open state).

The control unit 34 controls the opening of the expansion valve 33. The control unit 34 inputs the detection temperature of the element temperature detector 35 and controls the opening of the expansion valve 33 based on the input.

The element temperature detector 35 detects the temperature of the power element 36. The element temperature detector 35 is attached to the surface of the power element 36 and detects the surface temperature of the power element 36. Alternatively, the element temperature detector 35 is attached to the vicinity of the power element 36 and detects the temperature emitted from the surface of the power element 36. Fig. 3 shows a state where the element temperature detector 35 is attached to the vicinity of the power element 36.

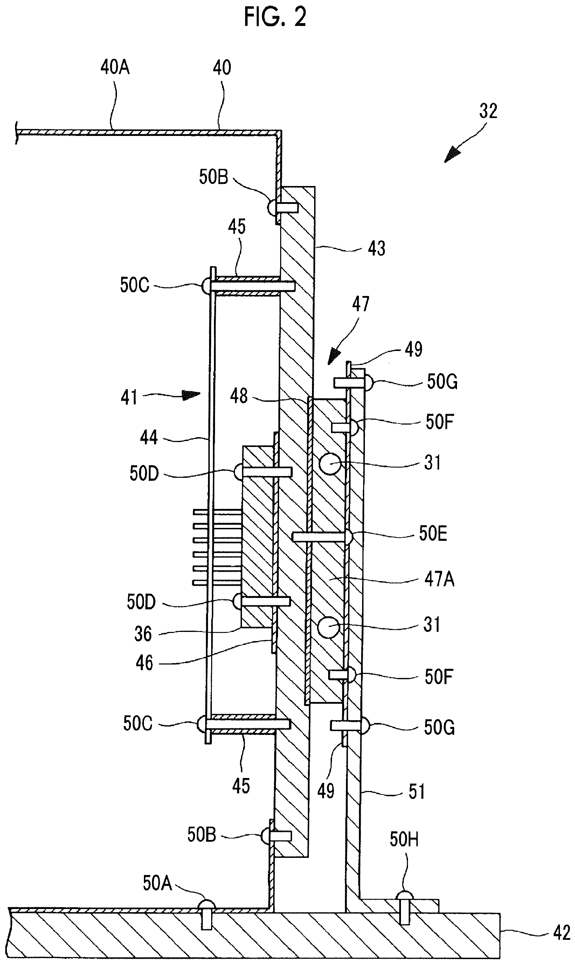

Next, the cooler 32 will be described with reference to Fig. 2.

As shown in Fig. 2, the cooler 32 houses the electric circuit 41 and the like inside the control box 40 as a casing. The control box 40 is a box main body 40A. The box main body 40A is a casing member accommodating the electric circuit 41 and the like. The box main body 40A is detachably attached to the base 42 on which each configuration of the above-described outdoor unit 2 is supported, by screws 50A.

In the box main body 40A, a through hole that penetrates inside and outside the casing member is formed. A heat transfer plate 43 is detachably attached to the box main body 40A by a screw 50B so as to close the through hole. The heat transfer plate 43 is a heat transfer member made of an aluminum block and is configured as a lid member that opens and closes the through hole.

In the electric circuit 41, the power element 36 is provided on a substrate 44 and connected thereto. The substrate 44 is detachably attached to the heat transfer plate 43 by a screw 50C with a spacer 45 interposed therebetween, inside the casing member as the box main body 40A. The power element 36 of the electric circuit 41 is detachably attached to the heat transfer plate 43 through a heat transfer sheet 46 by a screw 50D, inside the casing member as the box main body 40A.

A refrigerant jacket 47 has a cooling branched pipe 31 through which a refrigerant flows to the inside, and the cooling branched pipe 31 is inserted into a heat transfer member 47A which is an aluminum block. As shown in Fig. 1, the cooling branched pipe 31 connects the liquid pipe 21C between the outdoor heat exchanger 13 in the outdoor unit 2 and the indoor heat exchanger with the suction pipe 21E by bypassing them, and a part of the liquid refrigerant is circulated from the liquid pipe 21C. The heat transfer member 47A is detachably attached to the heat transfer plate 43 through a heat transfer sheet 48 by a screw 50E, outside the casing member as the box main body 40A. In the heat transfer member 47A, a mounting piece 49 is detachably attached to the outer edge thereof by a screw 50F. The mounting piece 49 is attached so as to extend to the outer periphery of the heat transfer member 47A. The mounting piece 49 is detachably attached to the bracket 51 by a screws 50G. The bracket 51 is detachably attached to the base 42 by a screw 50H.

In the refrigeration cycle device having such a configuration, the power element 36 is cooled by the refrigerant flowing through the cooling branched pipe 31 inside the refrigerant jacket 47 through the heat transfer plate 43. Thus, the power element 36 is prevented from reaching a higher temperature than the operable temperature.

The control unit 34 obtains the detection temperature by the element temperature detector 35 and controls the opening of the expansion valve 33 according to a predetermined sequence. The control unit 34 includes, for example, a central processing unit (CPU), a random access memory (RAM), a read only memory (ROM), a computer readable storage medium, and the like. A series of processes for realizing various functions are stored in a storage medium or the like in the form of a program as an example. The CPU reads the program to a RAM or the like and to process information and executes a calculation process, thereby realizing various functions. The program may be installed in advance in a ROM or other storage medium, may be provided in a state stored in a computer readable storage medium, or may be distributed through wired or wireless communication means. The computer-readable storage medium is a magnetic disk, a magnetooptical disk, a CD-ROM, a DVD-ROM, a semiconductor memory, or the like. The illustrations of the CPU, the RAM, the ROM, the storage medium, and the like are omitted.

As specific control by the control unit 34, for example, the setting lower limit temperature at which the expansion valve 33 is in a closed state can be set to 50°C, based on the detection temperature by the element temperature detector 35, the setting upper limit temperature at which the expansion valve 33 in a fully open state can be set to 60°C, based on the detection temperature by the element temperature detector 35, and when the detected temperature is between 50°C and 60°C, the opening of the expansion valve 33 can be set according to the detected temperature. The above control is an example, and the detection temperature at which the expansion valve 33 is in a closed state and the detection temperature at which the expansion valve 33 is in a fully open state may be other temperatures. The control unit 34 may control the opening of the expansion valve 33 based on other than the detection temperature of the element temperature detector 35. For example, the opening of the expansion valve 33 may be controlled based on the differential pressure between the inlet of the cooling branched pipe 31 and the outlet of the cooling branched pipe 31, or the opening of the expansion valve 33 may be controlled based on the flow rate of the refrigerant flowing through the cooling branched pipe 31 or the degree of superheat at the outlet of the cooling branched pipe 31.

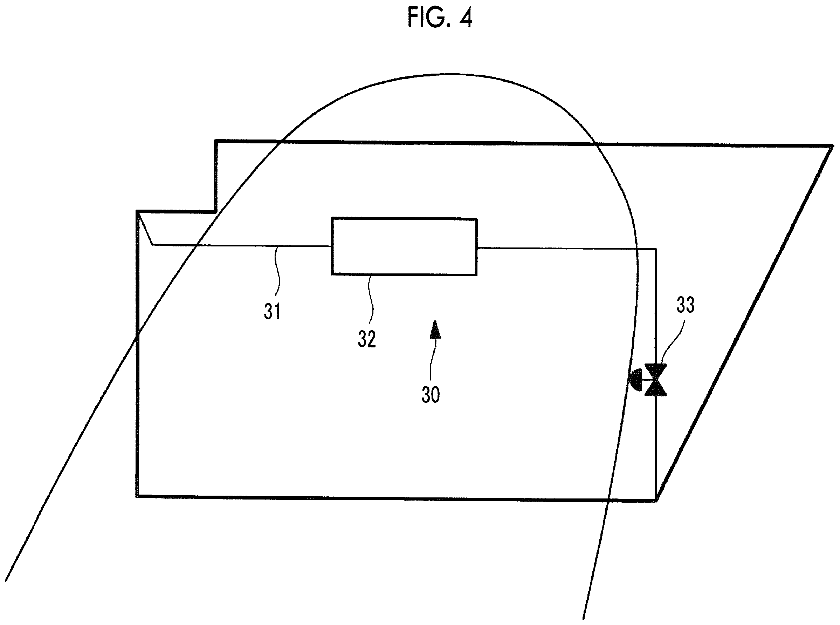

Fig. 4 is a Mollier diagram in a state where the air conditioner 1 is normally operated. As shown in Fig. 4, a part of the refrigerant is bypassed to the inlet side of the compressor 11 from between the outdoor heat exchanger 13 and the indoor heat exchanger, and the cooling device 30 cools the power element 36 by heat exchange between the refrigerant and the power element 36.

According to the present embodiment, the following effects are achieved.

In the present embodiment, since only one expansion valve is provided to cool the power element 36, the configuration can be simplified, and the risk of failure occurrence can be reduced by reducing the cause of failure.

Further, since the expansion valve 33 is provided in the cooling branched pipe 31, even in a case where a differential pressure between the inlet of the cooling branched pipe 31 and the outlet of the cooling branched pipe 31 is low, by adjusting the opening of the expansion valve 33, it is possible to cool the power element 36 by securing the flow rate of the refrigerant introduced into the cooling branched pipe 31.

Further, by adjusting the opening of the expansion valve 33, it is possible to make a necessary minimum amount of refrigerant flow to cool the power element 36. Therefore, in a case where the heat generation amount of the power element 36 is small, the amount of refrigerant flowing through the cooling branched pipe 31 is reduced, and it is possible to prevent the refrigerant from flowing into the compressor 11 while still containing the liquid phase without being completely evaporated by excessively consuming the refrigerant for cooling the power element 36.

Further, the expansion valve 33 is provided only on the downstream side (that is, on the low-pressure side) of the cooler 32. That is, a throttle is provided in the cooling branched pipe 31 on the upstream side of the cooler 32. Therefore, by reducing the opening of the expansion valve 33, the pressure of the refrigerant flowing through the cooler 32 can be set as the pressure on the high-pressure side. Thus, for example, when one compressor is stopped in a refrigerant circuit in which a plurality of compressors is combined, since the power element provided in the electric circuit that controls the stopped compressor does not generate heat, it does not need to be cooled and the opening of the expansion valve may be closed. In this case, since the pressure of the refrigerant flowing through the cooler becomes the pressure on the high-pressure side and the evaporation temperature becomes high, dew condensation of the power element can be prevented.

In the present embodiment, the temperature of the power element 36 itself to be cooled is detected. Therefore, for example, it is possible to more accurately know the temperature of the object to be cooled rather than indirectly detecting the temperature of the power element 36 such as detecting the temperature of the refrigerant having passed through the power element 36. Further, since the opening of the expansion valve 33 is controlled based on the accurately known temperature of the power element 36, the flow rate of the refrigerant flowing to the cooler 32 can be accurately controlled and the temperature of the power element 36 can be accurately controlled. Thus, occurrence of condensation due to overheating or excessive cooling of the power element 36 can be prevented. Further, since the temperature of the power element 36 can be precisely controlled, the amount of refrigerant introduced from the refrigerant circuit to the cooling branched pipe 31 can be minimized as necessary to cool the power element 36. Therefore, the capacity degradation of the air conditioner 1 caused by the decrease of the refrigerant of the refrigerant circuit can be minimized.

### [Second Embodiment]

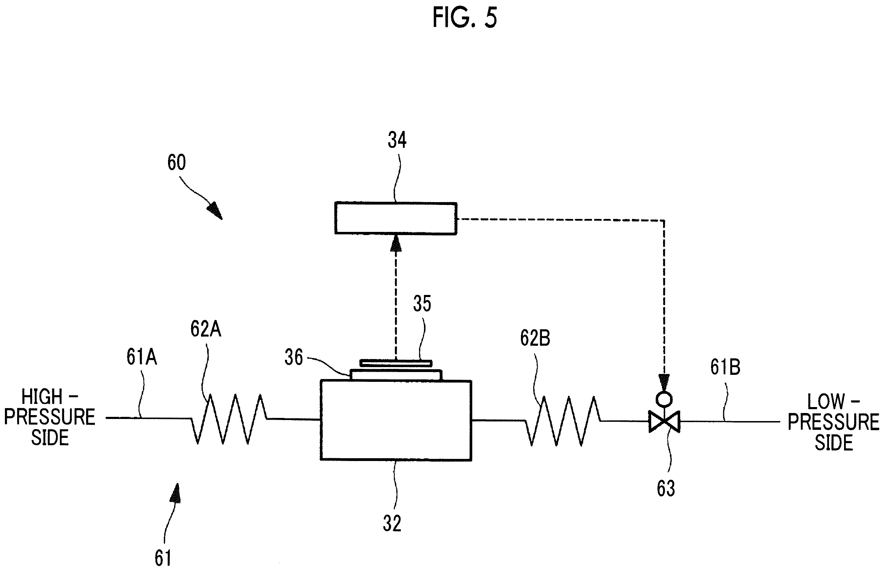

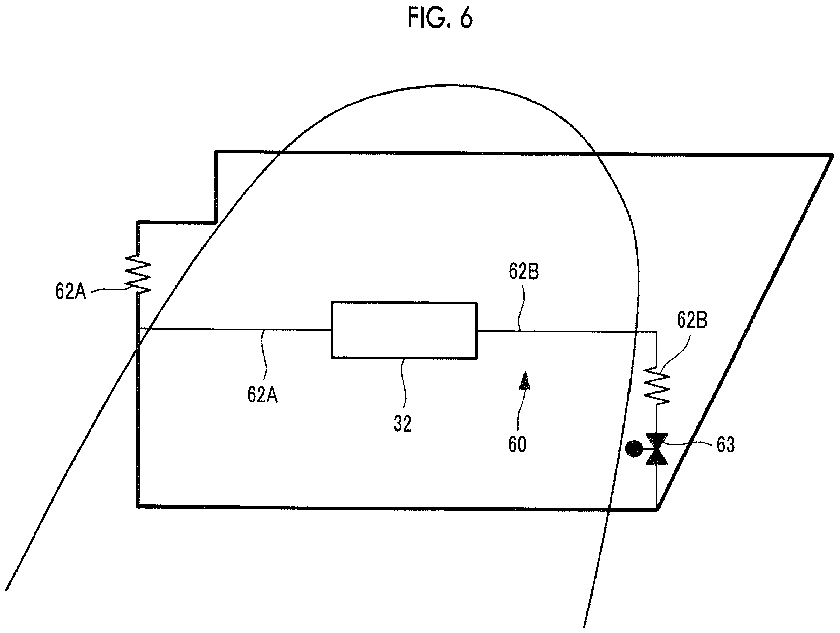

Next, a second embodiment of the present invention will be described with reference to Figs. 5 and 6.

In the second embodiment, the configuration of the cooling device 60 and the control contents of the control unit 34 are different from the first embodiment in some parts. The same constituent elements as in the first embodiment are denoted by the same reference numerals, and a description thereof is omitted.

As shown in Fig. 5, the cooling device 60 includes a cooling branched pipe 61, a cooler 32, a control unit 34, and an element temperature detector 35. The cooling branched pipe 61 includes an upstream-side pipe 61A positioned on the upstream side (high-pressure side of Fig. 5) of the cooler 32 and a downstream-side pipe 61B positioned on the downstream side (low-pressure side of Fig. 5) of the cooler 32. The cooling branched pipe 61 is provided with a cooler 32, and the cooling branched pipe 61 and the cooler 32 are in thermal contact with each other. An upstream-side capillary 62A is provided in the upstream-side pipe 61A. The downstream-side pipe 61B is provided with a downstream-side capillary 62B, and an electromagnetic valve (on-off valve) 63 positioned on the downstream side of the downstream-side capillary 62B. The electromagnetic valve 63 maintains the open state in the energized state and enters a closed state when the energized state is released.

The control unit 34 controls the opening and closing of the electromagnetic valve 63. As specific control by the control unit 34, for example, the setting upper limit temperature at which the electromagnetic valve 63 is controlled to be opened can be set to 60°C, based on the detection temperature by the element temperature detector 35, and the setting lower limit temperature at which the electromagnetic valve 63 is controlled to be closed can be set to 50°C, based on the detection temperature by the element temperature detector 35.

Fig. 6 is a Mollier diagram in a state where the air conditioner 1 is normally operated. As shown in Fig. 6, a part of the refrigerant is bypassed to the inlet side of the compressor 11 from between the outdoor heat exchanger 13 and the indoor heat exchanger, and the cooling device 60 cools the power element 36 by heat exchange between the refrigerant and the power element 36.

According to the present embodiment, the following effects are achieved.

In the present embodiment, since only the capillary and the electromagnetic valve operate to cool the power element 36, the configuration can be simplified, and the risk of failure occurrence can be reduced by reducing the cause of failure. Further, since the electromagnetic valve is used, the configuration can be realized at a lower cost than using the expansion valve.

Further, since the upstream-side capillary 62A is provided on the upstream side of the cooler 32, the refrigerant between heat exchangers communicating with the upstream-side pipe 61A is not directly introduced to the cooler 32. Further, since the downstream-side capillary 62B is provided on the downstream side of the cooler 32, the refrigerant on the inlet side of the compressor 11 communicating with the downstream-side pipe 61B is not directly introduced to the cooler 32. Therefore, a desired pressure loss is generated in the refrigerant to be introduced to the cooler 32 from the upstream side of the cooler 32 and the refrigerant to be introduced to the cooler 32 from the downstream side of the cooler 32, and the pressure of the refrigerant passing through the cooler 32 can be set to the desired pressure. In the present embodiment, as shown in Fig. 6, the pressure of refrigerant to be introduced to the cooler 32 is about medium pressure.

In addition, in the present embodiment, an electromagnetic valve 63 is provided on the downstream side of the downstream-side capillary 62B. The refrigerant passing through the cooler 32 becomes the gas phase and the flow rate of the gas-phase refrigerant becomes faster, so the pressure loss of the refrigerant when passing through the electromagnetic valve 63 increases. This makes it possible to lower the pressure of the refrigerant passing through the electromagnetic valve 63. Therefore, the pressure loss of the downstream-side capillary 62B provided on the same circuit as the electromagnetic valve 63 can be set low. In other words, it is possible to substitute a part of the downstream-side capillary 62B by the electromagnetic valve 63. This makes it possible to increase the diameter of the downstream-side capillary 62B and to shorten the total length, so that the downstream-side capillary 62B is less likely to clog dust or the like.

Further, the electromagnetic valve 63 is provided on the downstream side (that is, on the low-pressure side) of the cooler 32. Therefore, by closing the electromagnetic valve 63, the pressure of the refrigerant flowing through the cooler 32 can be set as the pressure on the high-pressure side. Thus, for example, when one compressor is stopped in a refrigerant circuit in which a plurality of compressors is combined, since the power element provided in the electric circuit that controls the stopped compressor does not generate heat, it does not need to be cooled and the electromagnetic valve 63 may be closed. In this case, since the pressure of the refrigerant flowing through the cooler becomes the pressure on the high-pressure side and the evaporation temperature becomes high, dew condensation of the power element can be prevented.

In the present embodiment, the temperature of the power element 36 itself to be cooled is detected. Therefore, for example, it is possible to more accurately know the temperature of the object to be cooled rather than indirectly detecting the temperature of the power element 36 such as detecting the temperature of the refrigerant having passed through the power element 36. Further, since the opening and closing of the electromagnetic valve 63 is controlled based on the accurately known temperature of the power element 36, the flow rate of the refrigerant flowing to the cooler 32 can be accurately controlled and the temperature of the power element 36 can be accurately controlled. Thus, occurrence of condensation due to overheating or excessive cooling of the power element 36 can be prevented. Further, since the temperature of the power element 36 can be precisely controlled, the amount of refrigerant introduced from the refrigerant circuit to the cooling branched pipe 31 can be minimized as necessary to cool the power element 36. Therefore, the capacity degradation of the air conditioner 1 caused by the decrease of the refrigerant of the refrigerant circuit can be minimized.

### [Third Embodiment]

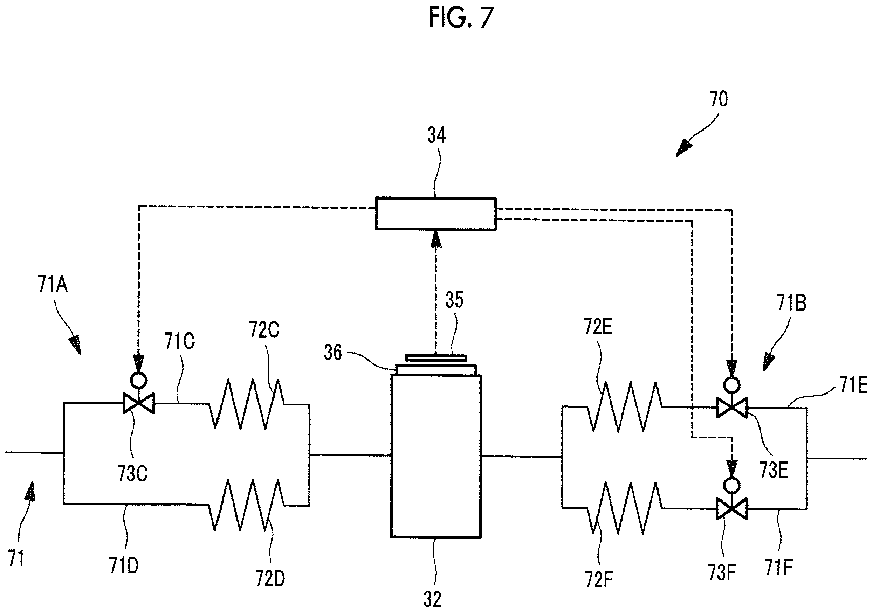

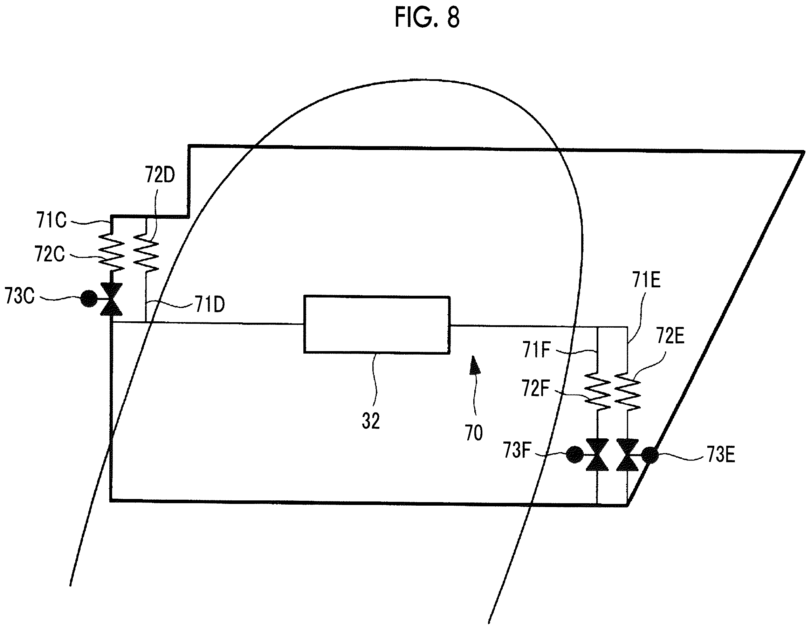

Next, a third embodiment of the present invention will be described with reference to Figs. 7 and 8.

In the third embodiment, the configuration of the cooling device 70 and the control contents of the control unit 34 are different from the first embodiment in some parts. The same constituent elements as in the first embodiment are denoted by the same reference numerals, and a description thereof is omitted.

As shown in Fig. 7, the cooling device 70 includes a cooling branched pipe 71, a cooler 32, a control unit 34, and an element temperature detector 35. The cooling branched pipe 71 is provided with a cooler 32, and the cooling branched pipe 71 and the cooler 32 are in thermal contact with each other. The cooling branched pipe 71 includes an upstream-side pipe 71A positioned on the upstream side of the cooler 32 and a downstream-side pipe 71B positioned on the downstream side of the cooler 32.

The upstream-side pipe 71A has a first upstream pipe 71C, and a second upstream pipe 71D formed in parallel with the first upstream pipe 71C. The first upstream pipe 71C has a first electromagnetic valve (first on-off valve) 73C and a first capillary 72C positioned on the downstream side of the first electromagnetic valve 73C. The second upstream pipe 71D has a second capillary 72D.

The downstream-side pipe 71B has a first downstream pipe 71E, and a second downstream pipe 71F formed in parallel with the first downstream pipe 71E. The first downstream pipe 71E includes a second electromagnetic valve (second on-off valve) 73E, and a third capillary 72E provided on the upstream side of the second electromagnetic valve 73E. The second downstream pipe 71F includes a third electromagnetic valve (third on-off valve) 73F, and a fourth capillary 72F provided on the upstream side of the third electromagnetic valve 73F. The third capillary 72E and the fourth capillary 72F have different pressure losses. Further, the first capillary 72C and the second capillary 72D have different pressure losses. The first electromagnetic valve 73C, the second electromagnetic valve 73E, and the third electromagnetic valve 73F maintain the open state in the energized state and enter a closed state when the energized state is released. The control unit 34 controls the opening and closing of the first electromagnetic valve 73C, the second electromagnetic valve 73E, and the third electromagnetic valve 73F, based on the detected temperature of the element temperature detector 35.

Fig. 8 is a Mollier diagram in a state where the air conditioner 1 is normally operated. As shown in Fig. 8, a part of the refrigerant is bypassed to the inlet side of the compressor 11 from between the outdoor heat exchanger 13 and the indoor heat exchanger, and the cooling device 70 cools the power element 36 by heat exchange between the refrigerant and the power element 36.

According to the present embodiment, the following effects are achieved.

In the above configuration, a first upstream pipe 71C provided with a first electromagnetic valve 73C and a first capillary 72C and a second upstream pipe 71D provided only with a second capillary 72D are provided on the upstream side of the cooler 32. Thus, in a case where the first electromagnetic valve 73C is in the closed state, the refrigerant circulates only in the second upstream pipe 71D, and in a case where the first electromagnetic valve 73C is in the open state, the refrigerant circulates in the first upstream pipe 71C and the second upstream pipe 71D. Therefore, even in a case where a differential pressure between the inlet of the cooling branched pipe 31 and the outlet of the cooling branched pipe 31 is low, by setting the first electromagnetic valve 73C to the open state, it is possible to cool the power element 36 by securing the flow rate of the refrigerant introduced into the cooling branched pipe 31.

Further, since the first capillary 72C and the second capillary 72D are provided in the upstream-side pipe 71A, the refrigerant between heat exchangers communicating with the cooling branched pipe 31 is not directly introduced to the cooler 32. Since the third capillary 72E and the fourth capillary 72F are provided in the downstream-side pipe 71B, the refrigerant on the inlet side of the compressor 11 communicating with the cooling branched pipe 31 is not directly introduced to the cooler 32. Therefore, a desired pressure loss is generated in the refrigerant to be introduced to the cooler 32 from the upstream side of the cooler 32 and the refrigerant to be introduced to the cooler 32 from the downstream side of the cooler 32, and the pressure of the refrigerant passing through the cooler 32 can be set to the desired pressure. In the present embodiment, as shown in Fig. 8, the pressure of refrigerant to be introduced to the cooler 32 is about medium pressure.

Further, a first downstream pipe 71E provided with a second electromagnetic valve 73E and a third capillary 72E and a second downstream pipe 71F provided with a third electromagnetic valve 73F and a fourth capillary 72F are provided on the downstream side of the cooler 32, and the third capillary 72E and the fourth capillary 72F have different pressure losses. In a case where the second electromagnetic valve 73E and the third electromagnetic valve 73F are in the open state, the refrigerant circulates both in the first downstream pipe 71E and the second downstream pipe 71F. In a case where the second electromagnetic valve 73E is in the open state and the third electromagnetic valve 73F is in the closed state, the refrigerant circulates only in the first downstream pipe 71E. In a case where the second electromagnetic valve 73E is in the closed state and the third electromagnetic valve 73F is in the open state, the refrigerant circulates only in the second downstream pipe 71F. In this way, three levels of pressure loss can be generated on the downstream side of the cooler 32, so that the pressure of the refrigerant flowing through the cooler 32 can be set to a desired pressure. Therefore, the evaporation temperature of the refrigerant flowing through the cooler 32 can be adjusted to a desired temperature.

In the above configuration, a second electromagnetic valve 73E and a third electromagnetic valve 73F are provided on the downstream sides of the third capillary 72E and the fourth capillary 72F, respectively. The refrigerant passing through the cooler 32 becomes the gas phase and the flow rate of the gas-phase refrigerant becomes faster, so the pressure loss of the refrigerant when passing through the second electromagnetic valve 73E and the third electromagnetic valve 73F increases. Thereby, the pressure of the refrigerant passing through the second electromagnetic valve 73E and the third electromagnetic valve 73F can be lowered. Therefore, the pressure loss of the capillary provided on the same circuit as the second electromagnetic valve 73E and the third electromagnetic valve 73F can be set low. In other words, it is possible to substitute a part of the third capillary 72E and the fourth capillary 72F by the second electromagnetic valve 73E and the third electromagnetic valve 73F. This makes it possible to increase the diameters of the third capillary 72E and the fourth capillary 72F and shorten the total length, so that the third capillary 72E and the fourth capillary 72F are less likely to clog dust or the like.

Further, a second electromagnetic valve 73E and a third electromagnetic valve 73F are provided on the downstream-side (that is, the lower pressure side) of the cooler 32. Therefore, by closing the second electromagnetic valve 73E and the third electromagnetic valve 73F, the pressure of the refrigerant flowing through the cooler can be set as the pressure on the high-pressure side. Thus, for example, when one compressor is stopped in a refrigerant circuit in which a plurality of compressors is combined, since the power element provided in the electric circuit that controls the stopped compressor does not generate heat, it does not need to be cooled and the electromagnetic valve may be closed. In this case, since the pressure of the refrigerant flowing through the cooler becomes the pressure on the high-pressure side and the evaporation temperature becomes high, dew condensation of the power element can be prevented.

In the present embodiment, the temperature of the power element 36 itself to be cooled is detected. Therefore, for example, it is possible to more accurately know the temperature of the object to be cooled rather than indirectly detecting the temperature of the power element 36 such as detecting the temperature of the refrigerant having passed through the power element 36. Further, since the opening of the expansion valve 33 is controlled based on the accurately known temperature of the power element 36, the flow rate of the refrigerant flowing to the cooler 32 can be accurately controlled and the temperature of the power element 36 can be accurately controlled. Thus, occurrence of condensation due to overheating or excessive cooling of the power element 36 can be prevented. Further, since the temperature of the power element 36 can be precisely controlled, the amount of refrigerant introduced from the refrigerant circuit to the cooling branched pipe 31 can be minimized as necessary to cool the power element 36. Therefore, the capacity degradation of the air conditioner 1 caused by the decrease of the refrigerant of the refrigerant circuit can be minimized.

### [Fourth Embodiment]

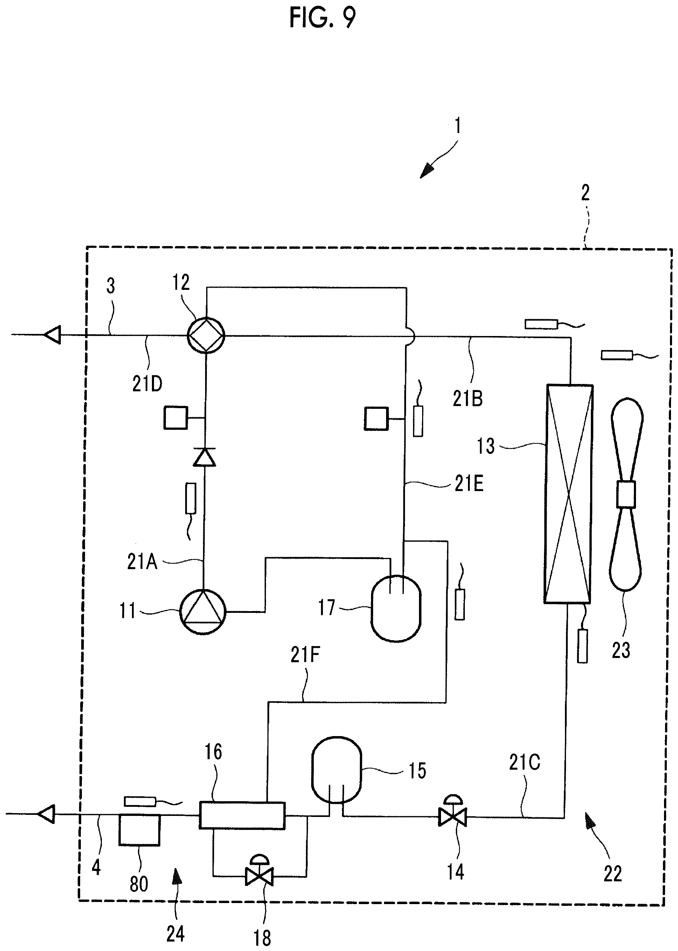

Next, a fourth embodiment of the present invention will be described with reference to Fig. 9 to Fig. 11.

In the fourth embodiment, the configurations of the refrigerant circuit and the cooling device 80 and the control contents of the control unit 34 are different from the first embodiment in some parts. The same constituent elements as in the first embodiment are denoted by the same reference numerals, and a description thereof is omitted.

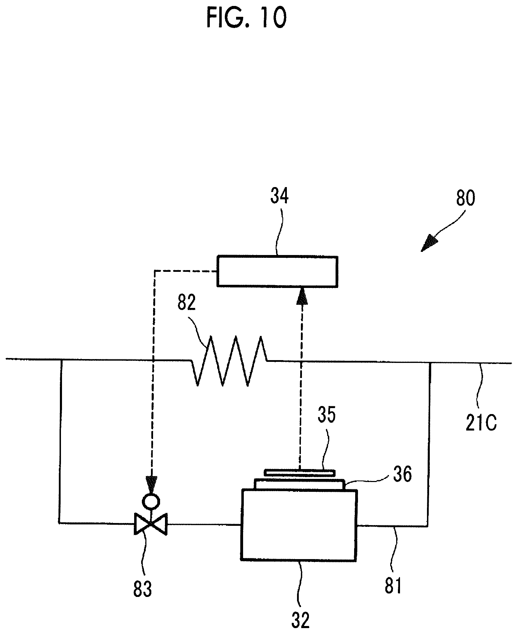

As shown in Fig. 9 and Fig. 10, the cooling device 80 includes a capillary 82 provided on the indoor heat exchanger side of the supercooling heat exchanger 16 of the liquid pipe 21C, a parallel pipe 81 formed in parallel with the capillary 82, a cooler 32 provided in the parallel pipe 81, an electromagnetic valve (valve portion) 83 provided in the parallel pipe 81 and disposed on the indoor heat exchanger side of the cooler 32, a control unit 34, and an element temperature detector 35. The parallel pipe 81 is in thermal contact with the cooler 32. The electromagnetic valve 83 maintains the open state in the energized state and enters a closed state when the energized state is released. The control unit 34 controls the opening and closing of the electromagnetic valve 83 based on the detected temperature of the element temperature detector 35. In addition, a bypass circuit as in the first embodiment to the third embodiment is not provided in the refrigerant circuit of the present embodiment.

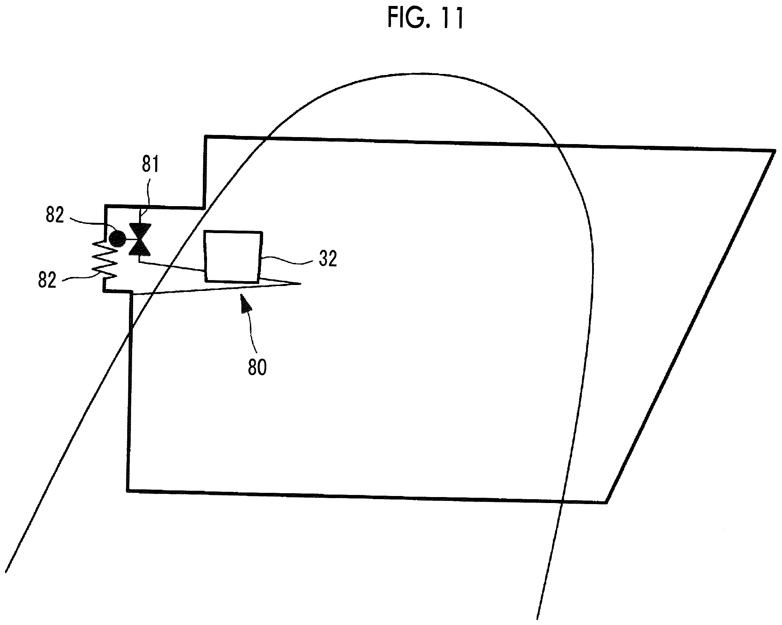

Fig. 11 is a Mollier diagram in a state where the air conditioner 1 is normally operated. As shown in Fig. 11, the cooling device 80 is provided in the refrigerant circuit between the outdoor heat exchanger 13 and the indoor heat exchanger and cools the power element 36 by heat exchange between the refrigerant and the power element 36.

According to the present embodiment, the following effects are achieved.

In the present embodiment, since only one electromagnetic valve 83 and one capillary 82 are provided to cool the power element 36, the configuration can be simplified, and the risk of failure occurrence can be reduced by reducing the cause of failure.

The cooler 32 is in thermal contact with the refrigerant circuit between heat exchangers. Therefore, the pressure of the refrigerant passing through the cooler 32 becomes relatively high and the evaporation temperature becomes high, so that dew condensation of the power element 36 can be prevented.

Further, when the electromagnetic valve 83 is closed, the refrigerant does not circulate in the parallel pipe 81, and circulation of a refrigerant to the cooler 32 can be stopped. Therefore, for example, by closing the electromagnetic valve 83 in a case where the temperature of the refrigerant changes rapidly, such as a case of switching between cooling and heating, damage to cooler 32 due to the rapid change in the temperature of the refrigerant circulating in the cooler 32 can be suppressed.

Further, since the cooling device 80 is provided in the liquid pipe 21C, even when the refrigerant having passed through the cooling device contains, for example, a liquid phase, the refrigerant is properly vaporized in the subsequent refrigerant circuit, so refrigerant does not flow into the compressor 11 while containing the liquid phase. Therefore, it is possible to prevent the compressor 11 from being damaged by so-called liquid backup. In addition, since the cooling device 80 is provided in the liquid pipe 21C, the refrigerant passing through the cooling device 80 is the high-pressure side, so that condensation of the cooling device 80 can be suppressed.

In the present embodiment, the electromagnetic valve 83 is provided on the indoor heat exchanger side of the cooler 32, but the electromagnetic valve 83 may be provided on the outdoor heat exchanger side of the cooler 32. Further, in the present embodiment, the configuration in which the capillary 82 is provided in the liquid pipe 21C and the cooler 32 and the electromagnetic valve 83 are provided in the parallel pipe 81 formed in parallel with the capillary 82 has been described. However, the cooler 32 and the electromagnetic valve 83 may be provided in the liquid pipe 21C, and the capillary 82 may be provided in the pipe formed in parallel with the cooler 32 and the electromagnetic valve 83. In the present embodiment, the electromagnetic valve 83 is used, but an expansion valve may be used instead of the electromagnetic valve. In the present embodiment, the cooling device 80 is provided on the indoor heat exchanger side of the supercooling heat exchanger 16, but the cooling device 80 may be provided on the outdoor heat exchanger side of the supercooling heat exchanger 16.

The present invention is not limited to the invention according to each of the above embodiments, and can be appropriately modified without departing from the scope of the invention. For example, in each of the above embodiments, a capillary is used, but an orifice may be used instead of the capillary. The electromagnetic valves of each of the above embodiments are controlled so as to be opened and closed by the control unit, but may be manually opened and closed.

### Reference Signs List

1 AIR CONDITIONER
2 OUTDOOR UNIT
3 GAS-SIDE PIPE
4 LIQUID-SIDE PIPE
11 COMPRESSOR
13 OUTDOOR HEAT EXCHANGER (HEAT SOURCE-SIDE HEAT EXCHANGER)
30 COOLING DEVICE
31 COOLING BRANCHED PIPE
32 COOLER
33 EXPANSION VALVE (VARIABLE THROTTLE)
34 CONTROL UNIT
35 ELEMENT TEMPERATURE DETECTOR
36 POWER ELEMENT
60 COOLING DEVICE
61 COOLING BRANCHED PIPE
61A UPSTREAM-SIDE PIPE
61B DOWNSTREAM-SIDE PIPE
62A UPSTREAM-SIDE CAPILLARY (UPSTREAM-SIDE FIXED THROTTLE)
62B DOWNSTREAM-SIDE CAPILLARY (DOWNSTREAM-SIDE FIXED THROTTLE)
63 ELECTROMAGNETIC VALVE (ON-OFF VALVE)
70 COOLING DEVICE
71 COOLING BRANCHED PIPE
71A UPSTREAM-SIDE PIPE
71B DOWNSTREAM-SIDE PIPE
71C FIRST UPSTREAM PIPE
71D SECOND UPSTREAM PIPE
71E FIRST DOWNSTREAM PIPE
71F SECOND DOWNSTREAM PIPE
72C FIRST CAPILLARY (FIRST FIXED THROTTLE)
72D SECOND CAPILLARY (SECOND FIXED THROTTLE)
72E THIRD CAPILLARY (THIRD FIXED THROTTLE)
72F FOURTH CAPILLARY (FOURTH FIXED THROTTLE)
73C FIRST ELECTROMAGNETIC VALVE (FIRST ON-OFF VALVE)
73E SECOND ELECTROMAGNETIC VALVE (SECOND ON-OFF VALVE)
73F THIRD ELECTROMAGNETIC VALVE (THIRD ON-OFF VALVE)
80 COOLING DEVICE
82 CAPILLARY (FIXED THROTTLE)
83 ELECTROMAGNETIC VALVE (VALVE PORTION)

## Claims

1. A refrigeration cycle device comprising:
a refrigerant circuit in which a compressor, a heat source-side heat exchanger, an expansion valve, and a usage-side heat exchanger are connected by pipes to circulate a refrigerant;
a cooling branched pipe that allows some of the refrigerant between heat exchangers in the refrigerant circuit to bypass to an inlet side of the compressor;
a cooler that is in thermal contact with the cooling branched pipe, and uses some of the refrigerant to cool a power element provided in an electric circuit that controls an operation of the compressor; and
a variable throttle provided only on a downstream side of the cooling branched pipe from the cooler.

2. A refrigeration cycle device comprising:
a refrigerant circuit in which a compressor, a heat source-side heat exchanger, an expansion valve, and a usage-side heat exchanger are connected by pipes to circulate a refrigerant;
a cooling branched pipe that allows some of the refrigerant between heat exchangers in the refrigerant circuit to bypass to an inlet side of the compressor;
a cooler that is in thermal contact with the cooling branched pipe, and uses some of the refrigerant to cool a power element provided in an electric circuit that controls an operation of the compressor;
an upstream-side fixed throttle provided on an upstream side of the cooling branched pipe from the cooler;
a downstream-side fixed throttle provided on a downstream side of the cooling branched pipe from the cooler; and
an on-off valve provided on the downstream side of the cooling branched pipe from the downstream-side fixed throttle.

3. A refrigeration cycle device comprising:
a refrigerant circuit in which a compressor, a heat source-side heat exchanger, an expansion valve, and a usage-side heat exchanger are connected by pipes to circulate a refrigerant;
a cooling branched pipe that allows some of the refrigerant between heat exchangers in the refrigerant circuit to bypass to an inlet side of the compressor; and
a cooler that is in thermal contact with the cooling branched pipe, and uses some of the refrigerant to cool a power element provided in an electric circuit that controls an operation of the compressor,
wherein the cooling branched pipe includes an upstream-side pipe positioned on an upstream side of the cooler and a downstream-side pipe positioned on a downstream side of the cooler,
wherein the upstream-side pipe includes a first upstream pipe provided with a first on-off valve and a first fixed throttle provided on a downstream side of the first on-off valve, and a second upstream pipe provided with a second fixed throttle and formed in parallel with the first upstream pipe,
wherein the downstream-side pipe includes a first downstream pipe provided with a second on-off valve and a third fixed throttle provided on an upstream side of the second on-off valve, and a second downstream pipe provided with a third on-off valve and a fourth fixed throttle provided on an upstream side of the third on-off valve and formed in parallel with the first downstream pipe, and
wherein the third fixed throttle and the fourth fixed throttle have different pressure losses.

4. A refrigeration cycle device comprising:
a refrigerant circuit in which a compressor, a heat source-side heat exchanger, an expansion valve, and a usage-side heat exchanger are connected by pipes to circulate a refrigerant;
a cooler that is in thermal contact with the refrigerant circuit between the heat exchangers, and uses some of the refrigerant to cool a power element provided in an electric circuit that controls an operation of the compressor;
a valve portion provided on the heat source-side heat exchanger side or the usage-side heat exchanger side of the cooler of the refrigerant circuit; and
a fixed throttle that is provided in parallel with the cooler and the valve portion.

## Amended claims

### Amended claims under Art. 19.1 PCT

1. (Amended) A refrigeration cycle device comprising:
a refrigerant circuit in which a compressor, a heat source-side heat exchanger, an expansion valve, and a usage-side heat exchanger are connected by pipes to circulate a refrigerant;
a cooling branched pipe that allows some of the refrigerant between heat exchangers in the refrigerant circuit to bypass to an inlet side of the compressor;
a cooler that is in thermal contact with the cooling branched pipe, and uses some of the refrigerant to cool a power element provided in an electric circuit that controls an operation of the compressor; and
a variable throttle provided only on a downstream side of the cooling branched pipe from the cooler,
wherein a downstream end portion of the cooling branched pipe is connected to an upstream side of an accumulator.

2. A refrigeration cycle device comprising:
a refrigerant circuit in which a compressor, a heat source-side heat exchanger, an expansion valve, and a usage-side heat exchanger are connected by pipes to circulate a refrigerant;
a cooling branched pipe that allows some of the refrigerant between heat exchangers in the refrigerant circuit to bypass to an inlet side of the compressor;
a cooler that is in thermal contact with the cooling branched pipe, and uses some of the refrigerant to cool a power element provided in an electric circuit that controls an operation of the compressor;
an upstream-side fixed throttle provided on an upstream side of the cooling branched pipe from the cooler;
a downstream-side fixed throttle provided on a downstream side of the cooling branched pipe from the cooler; and
an on-off valve provided on the downstream side of the cooling branched pipe from the downstream-side fixed throttle.

3. A refrigeration cycle device comprising:
a refrigerant circuit in which a compressor, a heat source-side heat exchanger, an expansion valve, and a usage-side heat exchanger are connected by pipes to circulate a refrigerant;
a cooling branched pipe that allows some of the refrigerant between heat exchangers in the refrigerant circuit to bypass to an inlet side of the compressor; and
a cooler that is in thermal contact with the cooling branched pipe, and uses some of the refrigerant to cool a power element provided in an electric circuit that controls an operation of the compressor,
wherein the cooling branched pipe includes an upstream-side pipe positioned on an upstream side of the cooler and a downstream-side pipe positioned on a downstream side of the cooler,
wherein the upstream-side pipe includes a first upstream pipe provided with a first on-off valve and a first fixed throttle provided on a downstream side of the first on-off valve, and a second upstream pipe provided with a second fixed throttle and formed in parallel with the first upstream pipe,
wherein the downstream-side pipe includes a first downstream pipe provided with a second on-off valve and a third fixed throttle provided on an upstream side of the second on-off valve, and a second downstream pipe provided with a third on-off valve and a fourth fixed throttle provided on an upstream side of the third on-off valve and formed in parallel with the first downstream pipe, and
wherein the third fixed throttle and the fourth fixed throttle have different pressure losses.

4. A refrigeration cycle device comprising:
a refrigerant circuit in which a compressor, a heat source-side heat exchanger, an expansion valve, and a usage-side heat exchanger are connected by pipes to circulate a refrigerant;
a cooler that is in thermal contact with the refrigerant circuit between the heat exchangers, and uses some of the refrigerant to cool a power element provided in an electric circuit that controls an operation of the compressor;
a valve portion provided on the heat source-side heat exchanger side or the usage-side heat exchanger side of the cooler of the refrigerant circuit; and
a fixed throttle that is provided in parallel with the cooler and the valve portion.
